# EUROPEAN PATENT APPLICATION

(11) **EP 4 848 554 A1**
(43) Date of publication of application: **02.12.2026**
(21) Application number: 25207944.7
(22) Date of filing: 10.10.2025
(51) Int. Cl.: H02M 3/00, H02M 3/335, H02J 50/12

(54) **POWER TRANSMITTING STRUCTURE AND INDUCTIVE POWER SUPPLY CIRCUIT**

(30) Priority: 29.05.2025 TW 114120254
(71) Applicant: DELTA ELECTRONICS, INC., Taoyuan City 320023 (TW)
(72) Inventor: WANG, Ying-Chieh, 320023 Taoyuan City (TW); LIU, Chien-Lung, 320023 Taoyuan City (TW); CHU, Tsen-En, 320023 Taoyuan City (TW); CHAN, Chi-Che, 320023 Taoyuan City (TW)
(74) Representative: 2K Patent Partnerschaft mbB

(57) **Abstract**

A power transmitting structure (1) is configured for an inductive power supply, and the power transmitting structure (1) includes a driving circuit (12), an isolation capacitor (13), a transformer (14), and a first resonant circuit (RT1). The driving circuit (12) switches an input power (Pin) into a driving power (Pd). The isolation capacitor (13) filters a DC component of the driving power (Pd) to provide a first driving power (Pd1). The transformer (14) couples the first driving power (Pd1) to a second driving power (Pd2), and the first resonant circuit (RT1) includes a first resonant capacitor (15) and a power transmitting winding (16). The power transmitting winding (16) resonates the second driving power (Pd2) with the first resonant capacitor (15) into an induced power (Ps), and the induced power (Ps) is transmitted by the power transmitting winding (16).

## Description

### BACKGROUND

### Technical Field

The present disclosure relates to a power transmitting structure and an inductive power supply circuit, and more particularly to a power transmitting structure and an inductive power supply circuit for power transmission by electromagnetic coupling.

### Description of Related Art

The statements in this section merely provide background information related to the present disclosure and do not necessarily constitute prior art.

With the continuous development and progress of science and technology, the technology of inductive power supply has received more and more attention and application. Especially in certain specific environments, the technology of inductive power supply can improve the reliability, convenience, safety, and automation of power supply compared with traditional cable power supply. In particular, the inductive power supply can be realized by electromagnetic induction. Its basic feature is that there is a certain gap between the power transmitting circuit and the power receiving circuit in the inductive power supply circuit, and power is transmitted through electromagnetic coupling according to the law of electromagnetic induction.

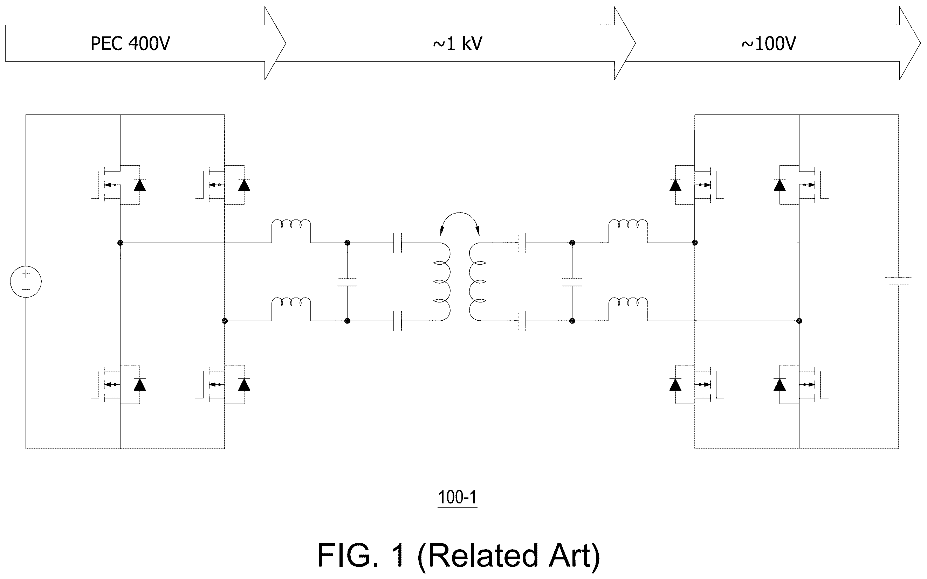

However, referring to FIG. 1, a conventional inductive power supply circuit is shown. After the front-stage circuit of the conventional inductive power supply circuit 100-1 provides a voltage of 400V, the full-bridge circuit switches and resonates a voltage of approximately 1kV through the resonance of the resonant tank at the power transmitting terminal. Furthermore, the power receiving terminal receives the induced power and reduces the voltage to 100V through the compensation of the resonant tank at the power receiving terminal and the switching of the full-bridge circuit. Therefore, the conventional inductive power supply circuit 100-1 must perform at least two voltage level conversions. Furthermore, since the voltage of the resonant tank of the inductive power supply circuit 100-1 is as high as 1kV, its circuit components must use high-withstand-voltage specifications, thereby making its circuit costs and circuit volume high.

On the other hand, in order to solve the problem of too high voltage amplitude of the resonant tank in FIG. 1, a step-down converter is added to the front stage of the power transmitting terminal to first step down the 400V voltage so that it will not generate a voltage with too high amplitude during resonance. However, this approach will inevitably increase the circuit volume and circuit cost, and will also generate additional power loss due to the operation of the step-down converter.

Therefore, how to design a power transmitting structure and an inductive power supply circuit to reduce circuit costs and circuit volume has become a critical topic in this field.

### SUMMARY

In order to solve the above-mentioned problems, the present disclosure provides a power transmitting structure. The power transmitting structure is configured for an inductive power supply circuit, and the power transmitting structure includes a driving circuit, an isolation capacitor, a transformer, and a first resonant circuit. The driving circuit switches an input power into a driving power. The isolation capacitor is coupled to the driving circuit, and filters a DC component of the driving power to provide a first driving power. The transformer is coupled to the isolation capacitor, and couples the first driving power to a second driving power. The first resonant circuit includes a first resonant capacitor and a power transmitting winding. The first resonant capacitor is coupled to the transformer, and receives the second driving power. The power transmitting winding is coupled to the first resonant capacitor, and resonates the second driving power with the first resonant capacitor into an induced power. The induced power is transmitted by the power transmitting winding.

In order to solve the above-mentioned problems, the present disclosure provides an inductive power supply circuit. The inductive power supply circuit includes a power transmitting circuit and a power receiving structure. The power transmitting circuit includes a power transmitting structure. The power receiving structure is coupled to the power transmitting structure, and the power receiving structure includes a second resonant circuit and a power receiving circuit. The second resonant circuit includes a power receiving winding and a second resonant capacitor. The power receiving winding is coupled to the power transmitting winding, and receives the induced power. The second resonant capacitor is coupled to the power receiving winding, and resonates the induced power with the power receiving winding into a power receiving power. The power receiving circuit is coupled to the second resonant circuit and a load, and converts the power receiving power into a DC power to supply power to the load.

The main purpose and effect of the present disclosure is that the power transmitting structure and the inductive power supply circuit are configured with isolation capacitors and transformers so that the power transmitting structure and the inductive power supply circuit do not need to use electronic components with high-voltage resistance so as to reduce the number of power conversions and the loss of power conversion, save circuit costs and circuit volume, and at the same time increase power transmission efficiency.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a circuit diagram of a conventional inductive power supply circuit.
FIG. 2A is a block diagram of an inductive power supply circuit according to the present disclosure.
FIG. 2B is a block circuit diagram of the inductive power supply circuit according to the present disclosure.
FIG. 3A is a block circuit diagram of a power transmitting structure according to a first embodiment of the present disclosure.
FIG. 3B is a block circuit diagram of the power transmitting structure according to a second embodiment of the present disclosure.
FIG. 4A is a schematic diagram of detection points of the power transmitting structure during operation according to the present disclosure.
FIG. 4B is a waveform diagram of each detection point measured in FIG. 4A.
FIG. 5 is a block circuit diagram of a power supply device of the inductive power supply circuit in which the power transmitting structure is applied according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

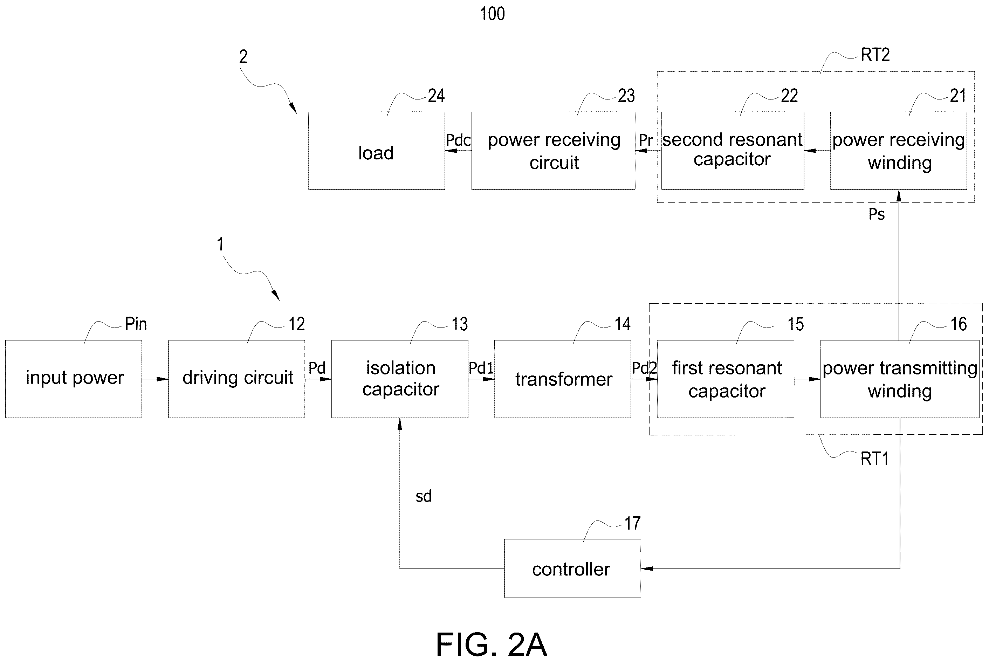

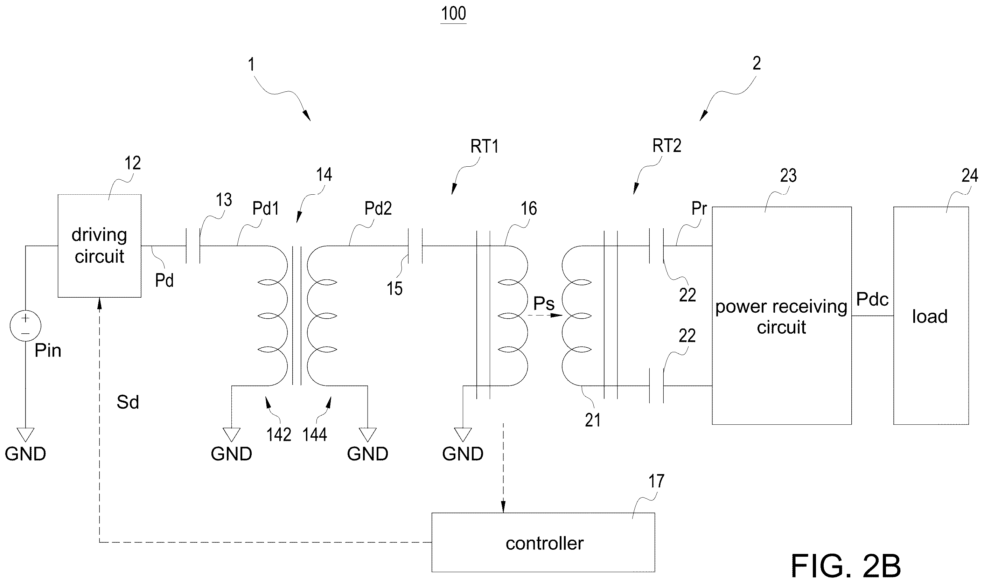

Please refer to FIG. 2A and FIG. 2B, which show a block diagram and a block circuit diagram of an inductive power supply circuit according to the present disclosure respectively, and also refer to FIG. 1. The inductive power supply circuit 100 includes a power transmitting structure 1 and a power receiving structure 2. The power transmitting structure 1 is used for wirelessly transmitting an induced power Ps to the power receiving structure 2 by electromagnetic coupling so as to supply power to a load 24 coupled to the power receiving structure 2. In particular, the inductive power supply circuit 100 may be a resonant converter circuit (for example, but not limited to, a converter circuit with a resonant tank, such as LC, LLC, etc.), which mainly performs power conversion through the resonance of the resonant tank. Specifically, the power transmitting structure 1 includes a driving circuit 12, an isolation capacitor 13, a transformer 14, a first resonant circuit RT1, and a controller 17. The first resonant circuit RT1 includes a first resonant capacitor 15 and a power transmitting winding 16. The power receiving structure 2 includes a second resonant circuit RT2 and a power receiving circuit 23, and the second resonant circuit RT2 includes a power receiving winding 21 and a second resonant capacitor 22. The power transmitting structure 1 is controlled by the controller 17 to transmit the induced power Ps wirelessly to the power receiving winding 21 of the power receiving structure 2 through the power transmitting winding 16 so that the inductive power supply circuit 100 can supply power to the load 24 by electromagnetic coupling (i.e., non-physical power line transmission).

Furthermore, the driving circuit 12 receives an input power Pin and switches the input power Pin to a driving power Pd. The input power Pin may be, for example, but not limited to, in an AC-to-DC form, and its typical application may be, for example, but not limited to, the output of the power factor correction circuit (not shown). The power factor correction circuit (not shown) can efficiently convert the input power Pin into a DC input power Pin under the condition of receiving different AC power so that the driving circuit 12 can switch to the driving power Pd. The input power Pin may be, for example, but not limited to, a DC power source such as a battery, and its typical application may be, for example, but not limited to, a battery system of an electric vehicle (not shown). The driving circuit 12 may mainly be a driver composed of switching components, which may be a full-bridge or half-bridge driving structure. In the half-bridge driving structure, the driving circuit 12 can switch the input power Pin between the voltage level of the input power Pin and the voltage level of a ground terminal GND according to a driving signal Sd provided by the controller 17 to output the driving power Pd. Therefore, in the configuration of the driving circuit 12 as a half-bridge driving structure, one terminal of the transformer 14 is coupled to the ground terminal GND (as shown in FIG. 2B). On the other hand, the driving circuit 12 may also be a full-bridge driving structure, and in the configuration of the driving circuit 12 as a full-bridge driving structure, both terminals of the transformer 14 are coupled to the driving circuit 12.

The transformer 14 includes a primary-side winding 142 and a secondary-side winding 144 coupled to the primary-side winding 142, and the isolation capacitor 13 is coupled to the driving circuit 12 and the primary-side winding 142. The isolation capacitor 13 is used to filter the DC component of the driving power Pd and provide a first driving power Pd1 to isolate the DC component between the driving circuit 12 and the primary-side winding 142. In particular, since the isolation capacitor 13 is used to isolate the DC component between the driving circuit 12 and the primary-side winding 142, the ideal condition is that there is no resonance between the isolation capacitor 13 and the primary-side winding 142 during the operation of the power transmitting structure 1. Specifically, although the isolation capacitor 13 and the primary-side winding 142 at the input terminal of the transformer 14 will form a resonant circuit, the present disclosure specifically configures a first resonant frequency of the isolation capacitor 13 and the primary-side winding 142 to be much lower than an operating frequency of the driving circuit 12 (i.e., the frequency of the driving signal Sd) to slow down the resonance phenomenon between the isolation capacitor 13 and the primary-side winding 142 to suppress the transformer 14 from participating in the resonance.

The transformer 14 is used to couple the first driving power Pd1 to the second driving power Pd2, and the transformer 14 may be a step-down transformer or a step-up transformer. Specifically, the transformer 14 may be the step-down transformer with a turns ratio of N:1 between the primary-side winding 142 and the secondary-side winding 144, and the step-down transformer is used to step down and couple the first driving power Pd1 with a higher voltage level to the second driving power Pd2 with a lower voltage level so as to provide the second driving power Pd2 with a lower voltage level through the secondary-side winding 144. Alternatively, the transformer 14 may be the step-up transformer with a turns ratio of 1:N between the primary-side winding 142 and the secondary-side winding 144, and the step-up transformer is used to step up and couple the first driving power Pd1 with a lower voltage level to the second driving power Pd2 with a higher voltage level so as to provide the second driving power Pd2 with a higher voltage level through the secondary-side winding 144.

A first terminal of the first resonant capacitor 15 is coupled to the secondary-side winding 144 of the transformer 14, and a second terminal of the first resonant capacitor 15 is coupled to the power transmitting winding 16. The first resonant capacitor 15 and the power transmitting winding 16 form a first resonant circuit RT1 so that a capacitance of the first resonant capacitor 15 and an inductance of the power transmitting winding 16 can determine a second resonant frequency. The second resonant frequency of the resonant conversion circuit generally needs to be designed corresponding to the operating frequency of the resonant conversion circuit. The reason is that the operating frequency of the resonant conversion circuit and the resonant frequency of the resonant tank are usually not exactly the same, but they are closely related, and they can be adjusted according to the design purpose (for example, but not limited to, the operating frequency can be varied above and below the resonant frequency to adjust the output voltage). Therefore, the first resonant capacitor 15 receives the second driving power Pd2, and the second driving power Pd2 resonates through the second resonant frequency determined by the power transmitting winding 16 and the first resonant capacitor 15 to generate an induced power Ps and transmit the induced power Ps in the form of electromagnetic energy outward through the power transmitting winding 16.

In summary, since the isolation capacitor 13 must be configured to minimize resonance with the primary-side winding 142, and the first resonant capacitor 15 and the power transmitting winding must provide resonance corresponding to the operating frequency, the first resonant frequency is configured to be much lower than the operating frequency of the driving circuit 12 so that the first resonant frequency is configured to be lower than the second resonant frequency. Accordingly, the capacitance of the isolation capacitor 13 may be designed to be larger than the first resonant capacitor 15 to avoid the occurrence of resonance, which is a better implementation. However, in actual applications, due to cost and volume considerations, the capacitance of the isolation capacitor 13 is not suitable for being designed too large, as long as the first resonant frequency is not too close to the operating frequency.

Please refer to FIG. 2A and FIG. 2B again, the power receiving winding 21 is coupled to the power transmitting winding 16, and the power receiving winding 21 is used to receive the induced power Ps transmitted by the power transmitting winding 16 by electromagnetic coupling. The second resonant capacitor 22 is coupled to the power receiving winding 21, and the second resonant capacitor 22 is used to match the power receiving winding 21 to form a second resonant circuit RT2 so that the capacitance of the second resonant capacitor 22 and the inductance of the power receiving winding 21 determine a third resonant frequency and increase the efficiency of the power receiving winding 21 in receiving the induced power Ps. In particular, the second resonant frequency and the third resonant frequency may be positively correlated, which may be mainly designed according to the operating frequency of the resonant conversion circuit. Therefore, the induced power Ps can resonate through the third resonant frequency determined by the power receiving winding 21 and the second resonant capacitor 22 to generate a power receiving power Pr.

The power receiving circuit 23 is coupled to the second resonant circuit RT2 and the load 24 to convert the power receiving power Pr into a DC power Pdc to supply power to the load 24. The power receiving circuit 23 may be, for example, but not limited to, a rectifier circuit, and it may be a half-bridge or full-bridge rectifier circuit to rectify a waveform with high and low voltage levels into a DC voltage level. In addition, in one embodiment, the first resonant circuit RT1 and the second resonant circuit RT2 shown in FIG. 2B are only one of the simpler implementations of many resonant tank implementations, and therefore are not limited to the structure shown in FIG. 2B. Any circuit structure that may be used as a resonant tank should be included in the scope of this embodiment. On the other hand, the load 24 may be a battery to receive the DC power Pdc for charging, or the load 24 may be other devices that directly use the DC power Pdc, which are not limited here.

The controller 17 is coupled to the power transmitting winding 16 and the driving circuit 12, and adjusts the driving signal Sd provided to the driving circuit 12 by detecting the induced power Ps on the power transmitting winding 16 so as to adjust the induced power Ps through closed-loop control. In particular, the controller 17 may be, for example, but not limited to, a microprocessor MCU, which include a detection circuit, an operating program, a driving signal generator, output the driving signal Sd to the driving circuit 12, and receive a resonance signal analysis process corresponding to the induced power Ps. The internal program of the controller 17 includes programs such as the power receiving detection stage, the power transmission stage, the foreign body detection stage, and the standby stage. The above-mentioned programs may all be controlled by the controller 17 to control the output of the driving circuit 12 and detect the resonance signal at the same time so as to complete the operation and control functions of the power transmitting structure 1.

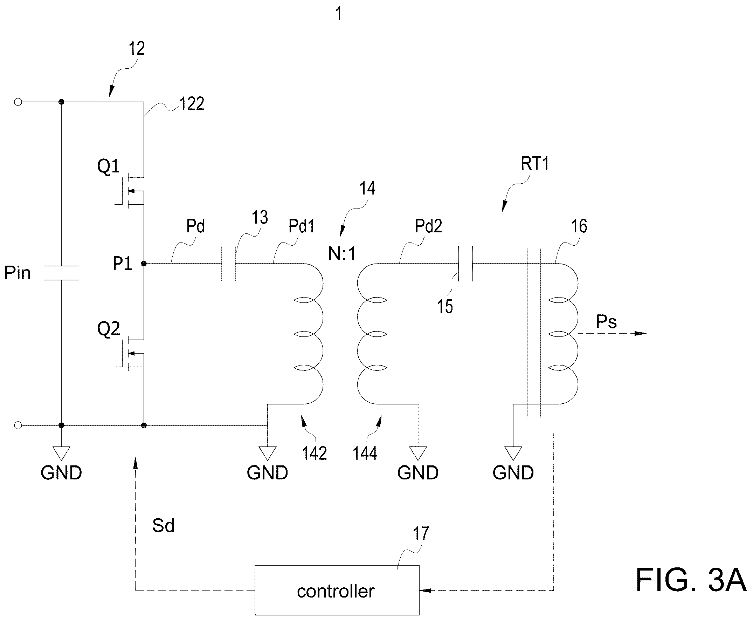

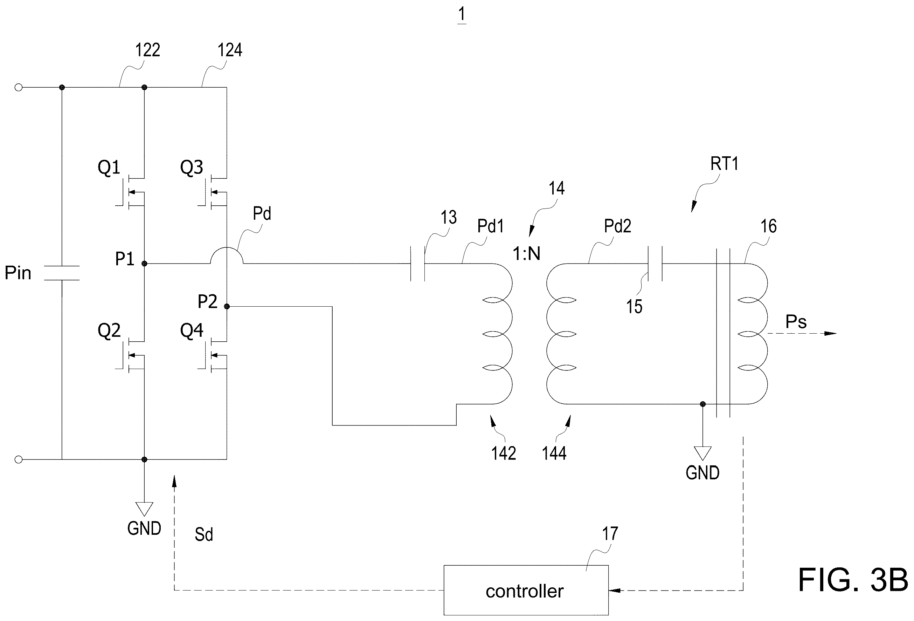

Please refer to FIG. 3A, which shows a block circuit diagram of a power transmitting structure according to a first embodiment of the present disclosure; please refer to FIG. 3B, which shows a block circuit diagram of the power transmitting structure according to a second embodiment of the present disclosure, and also refer to FIG. 2A and FIG. 2B. In FIG. 3A, the driving circuit 12 is a half-bridge driving structure, and the driving circuit 12 includes a first switching bridge arm 122. The first switching bridge arm 122 includes a first switch Q1 and a second switch Q2 connected in series, and the isolation capacitor 13 is coupled to a first node P1 between the first switch Q1 and the second switch Q2. A first terminal of the primary-side winding 142 of the transformer 14 is coupled to the isolation capacitor 13, and a second terminal of the primary-side winding 142 is coupled to the ground terminal GND. The difference between FIG. 3B and FIG. 3A is that the driving circuit 12 is a full-bridge driving structure, and the driving circuit 12 further includes a second switching bridge arm 124. The second switching bridge arm 124 includes a third switch Q3 and a fourth switch Q4 connected in series, and the isolation capacitor 13 is coupled to the first node P1 between the first switch Q1 and the second switch Q2. A first terminal of the primary-side winding 142 of the transformer 14 is coupled to the isolation capacitor 13, and a second terminal of the primary-side winding 142 is coupled to a second node P2 between the third switch Q3 and the fourth switch Q4.

With reference to FIG. 3A and FIG. 3B, in the half-bridge driving structure, the driving circuit 12 uses only two switches (i.e., the first switch Q1 and the second switch Q2), thereby making its structure simple. Furthermore, in the half-bridge drive architecture, since its driving force is equal to the bus voltage, the equivalent voltage at its output terminal is half of the DC bus voltage (i.e., the average value of the bus voltage when the duty cycle is 50%). The resonant tank has a small voltage swing and low voltage requirements on magnetic parts and components, thereby making it more suitable for applications where high voltage (for example, but not limited to, 400V) is stepped down to low voltage (for example, but not limited to, 12V, 24V, 48V). Therefore, the power transmitting structure 1 of FIG. 3A is more suitable for step-down applications so that the transformer 14 is preferably a step-down transformer. Furthermore, when the transformer 14 uses a step-down transformer, the isolation capacitor 13 and the first resonant capacitor 15 may be configured appropriately. Specifically, the isolation capacitor 13 has a first voltage withstand value and a first current withstand value, and the first resonant capacitor 15 has a second voltage withstand value and a second current withstand value. When the transformer 14 uses a step-down transformer, the first voltage withstand value may be set to be higher than the second voltage withstand value, and the second current withstand value may be set to be higher than the first current withstand value.

On the contrary, since the driving circuit 12 uses at least four switches (i.e., the first switch Q1, the second switch Q2, the third switch Q3, and the fourth switch Q4) in the full-bridge driving structure, its structure is more complicated. Furthermore, in the full-bridge driving structure, its driving force is equal to twice the bus voltage so that it can apply the entire bus voltage to the resonant tank (i.e., the average value of twice the bus voltage when the duty cycle is 50%), thereby making its driving ability stronger. The voltage swing of the resonant tank is twice that of the half bridge, which is beneficial to increase the gain, thereby making it more suitable for applications where low voltage (for example, but not limited to, 400V) is step up to high voltage (for example, but not limited to, 1kV). Therefore, the power transmitting structure 1 of FIG. 3B is more suitable for boosting applications so that the transformer 14 is preferably a step-up transformer. Furthermore, when the transformer 14 uses a step-up transformer, the isolation capacitor 13 and the first resonant capacitor 15 may be configured appropriately. Specifically, when the transformer 14 uses a step-up transformer, the first voltage withstand value may be set to be lower than the second voltage withstand value, and the second current withstand value may be set to be lower than the first current withstand value.

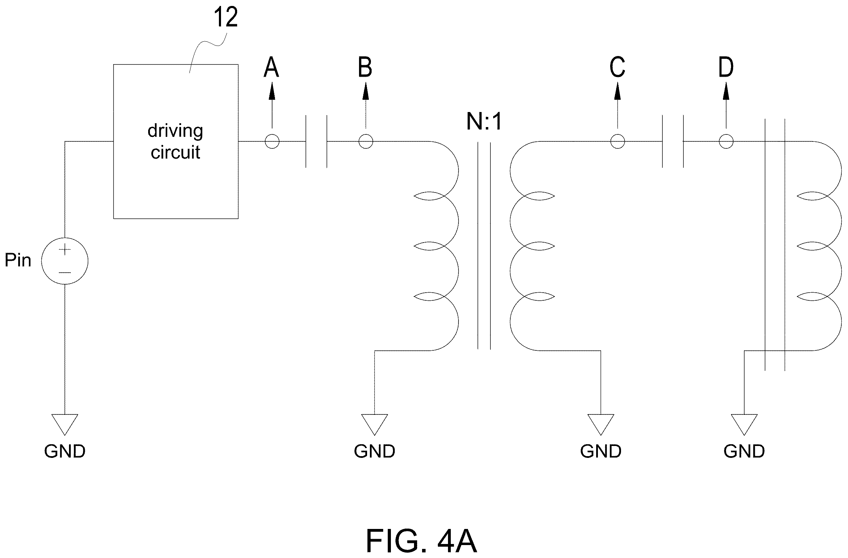

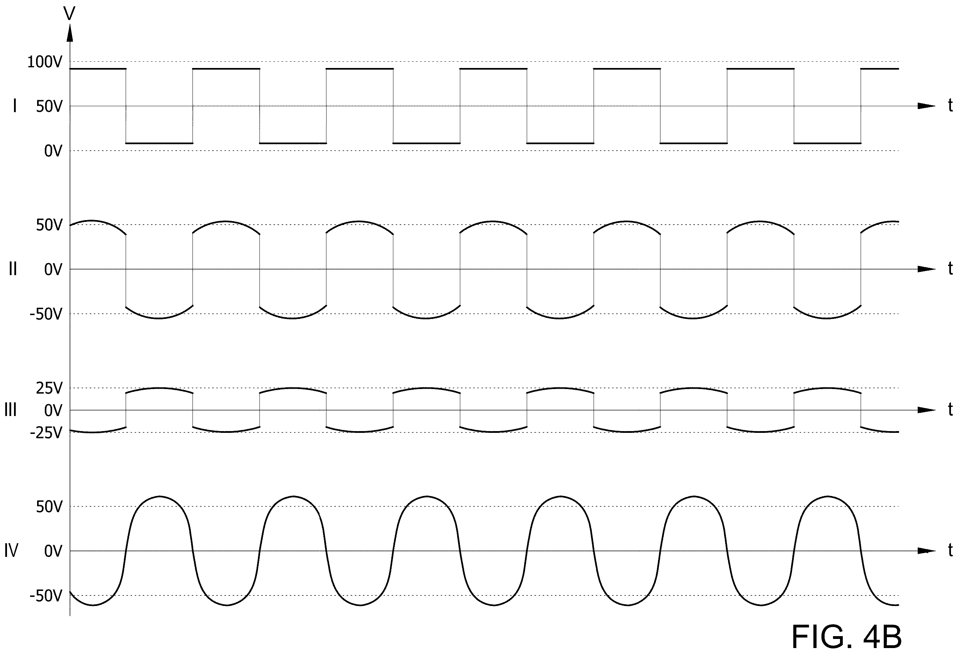

Please refer to FIG. 4A, which shows a schematic diagram of detection points of the power transmitting structure during operation according to the present disclosure; please refer to FIG. 4B, which shows a waveform diagram of each detection point measured in FIG. 4A, and also refer to FIG. 2A to FIG. 4B. In FIG. 4A, the power transmitting structure 1 is applied to the circuit structure of the half-bridge driving structure of FIG. 3A with a step-down transformer, and the turns ratio of the step-down transformer is 2:1. When the voltage level of the input power Pin is 80V, the driving circuit 12 switches the input power Pin between the voltage level of the input power Pin and the voltage level of the ground terminal GND to output the driving power Pd with a square wave (at a detection point A). In particular, the waveform of the detection point A may be combined with the waveform I of FIG. 4B, which is a square wave switching between 80V and 0V. The driving power Pd with 80V is filtered by the isolation capacitor 13 to remove the DC component and provide the first driving power Pd1 (at a detection point B) with a positive and negative value of approximately 40V. In particular, the waveform of the detection point B may be combined with the waveform II of FIG. 4B, which is a square wave switching between 40V and -40V. Since the isolation capacitor 13 and the primary-side winding 142 of the transformer 14 will still resonate in the actual circuit, the voltage level is not fixed at 40V or -40V.

The first driving power Pd1 is coupled to the second driving power Pd2 (at a detection point C) with a positive and negative value of approximately 20V through the transformer 14 with a turns ratio of 2 to 1. In particular, the waveform of the detection point C may be combined with the waveform III of FIG. 4B, which is reduced by half to form a square wave with a voltage level switching between approximately 20V and -20V. The second driving power Pd2 is generated by the resonance of the first resonant capacitor 15 and the power transmitting winding 16, and the resonance is performed at a second resonant frequency corresponding to the operating frequency of the resonant conversion circuit to generate the induced power Ps (at a detection point D, i.e., positive and negative value of approximately 60V). In particular, the waveform of the detection point D may be combined with the waveform III of FIG. 4B, which forms a quasi-sine wave with a positive and negative value of 120V through resonance. Finally, the induced power Ps may be transmitted to the power receiving structure 2 through the power transmitting winding 16.

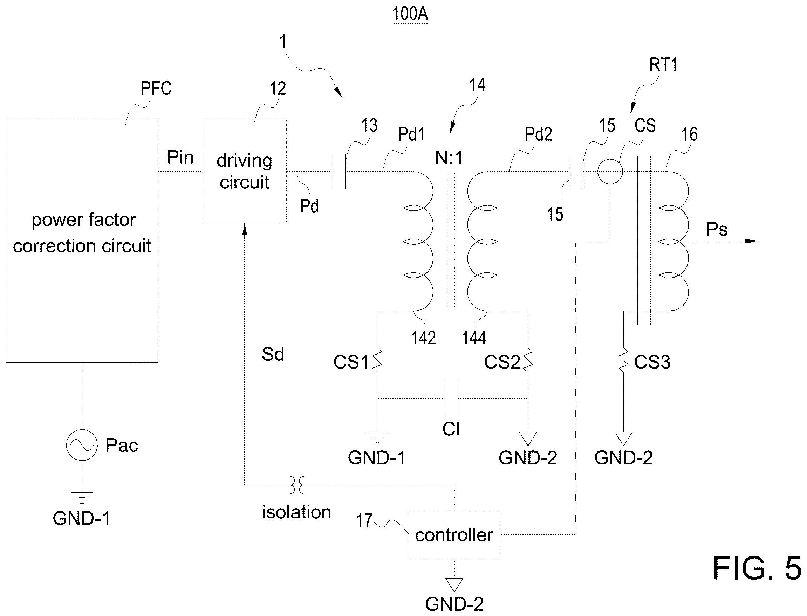

Please refer to FIG. 5, which shows a block circuit diagram of a power supply device of the inductive power supply circuit in which the power transmitting structure is applied according to the present disclosure, and also refer to FIG. 2A to FIG. 4B. In FIG. 5, the inductive power supply circuit 100 includes a power transmitting circuit 100A, and the power transmitting circuit 100A includes a power factor correction circuit PFC and a power transmitting structure 1. The power factor correction circuit PFC is coupled to the power transmitting structure 1 to receive an AC power Pac (for example, but not limited to, 110V), and the power factor correction circuit PFC converts the AC power Pac into a DC input power Pin (for example, but not limited to, 400V). The power factor correction circuit PFC improves the power factor of the AC power Pac (for example, but not limited to, increasing it to above 0.9) while converting the power so as to provide a high-efficiency conversion effect.

On the other hand, in FIG. 5, the power transmitting structure 1 is schematically illustrated in FIG. 3A, and the transformer 14 divides the inductive power supply circuit 100 into a primary side and a secondary side to serve as an isolated power supply system. The power transmitting structure 1 includes a current sensing circuit CS1, and the current sensing circuit CS1 is connected to the primary-side winding 142 in series to sense the current flowing through the primary-side winding 142 when the driving circuit 12 is operating. Preferably, the current sensing circuit CS1 may be a resistor, and is connected in series between the second terminal of the primary-side winding 142 and the ground terminal GND so that the controller 17 may sense the current flowing through the primary-side winding 142 by detecting the cross voltage on the resistor, but is not limited thereto. Similarly, the secondary-side winding 144 and the power transmitting winding 16 may also be configured with current sensing circuits CS2, CS3, or use a current sensing winding CS to detect the current. Therefore, the controller 17 may obtain the measured current signal as a reference for adjusting the driving signal Sd.

On the other hand, the controller 17 may be configured on either side of the isolated power supply system, and according to its configuration position, the circuit for providing the driving signal Sd and the circuit for detecting the current (i.e., the current sensing circuits CS1 to CS3, the current sensing winding CS, etc.) may also selectively increase the isolation configuration. In the actual circuit design, a capacitor CI may be configured in the transformer 14 to isolate the primary-side winding 142 and the secondary-side winding 144. Therefore, the primary-side winding 142 and the secondary-side winding 144 may be coupled to the ground terminals GND-1, GND-2 with different reference potentials to realize the circuit structure of the isolated power supply.

Please refer to FIG. 2A and FIG. 5, the present disclosure uses the input power Pin provided by the power factor correction circuit PFC to directly use the driving circuit 12 to output the driving signal Sd, and uses the isolation capacitor 13 to isolate the DC component between the driving circuit 12 and the primary-side winding 142, and the inductive power supply circuit 100 can perform a single conversion of the voltage level through the coupling of the transformer 14. That is, during the process from when the transformer 14 steps down or steps up the voltage until the load 24 receives the power required for operation, except for the voltage level oscillation generated by resonance, the converter, the step-up or step-down transformer and other devices are no longer used to adjust the voltage level up or down. Therefore, the input power Pin before the primary-side winding 142 has the same voltage amplitude as the first driving power Pd1, and the second driving power Pd2 after the secondary-side winding 144 has the same voltage amplitude as the DC power Pdc.

Therefore, the present disclosure can use a higher input power pin (for example, but not limited to, 400V) to step down to a specific voltage (for example, but not limited to, 100V) through a step-down transformer 14, and during the process from when the transformer 14 steps up until the load 24 receives the power required for operation (i.e., the DC power Pdc), the voltage level is no longer adjusted up or down, and the DC power Pdc of 100V is provided to the load 24, that is, the inductive power supply circuit 100 of the present disclosure only performs a voltage level conversion once at the power transmitting terminal. The operation of the step-up transformer 14 is also the same, which can step up a power Pin from, for example, but not limited to, 50V to 100V. Therefore, compared with the previous structure of FIG. 1, the inductive power supply circuit 100 of the present disclosure does not need to use electronic components with high-voltage resistance due to its voltage as high as 1kV, and does not need to add a set of step-down converters before outputting to the driving circuit 12, and does not need to perform at least two voltage level conversions. Therefore, the inductive power supply circuit 100 of the present disclosure can reduce the number of power conversions and the power conversion losses, save circuit costs and circuit volume, and increase the power transmission efficiency at the same time.

## Claims

1. A power transmitting structure (1) configured for an inductive power supply circuit (100), **characterized in that** the power transmitting structure (1) comprising:
a driving circuit (12) configured to switch an input power (Pin) into a driving power (Pd),
an isolation capacitor (13) coupled to the driving circuit (12), and configured to filter a DC component of the driving power (Pd) to provide a first driving power (Pd1),
a transformer (14) coupled to the isolation capacitor (13), and configured to couple the first driving power (Pd1) to a second driving power (Pd2), and
a first resonant circuit (RT1) comprising:
a first resonant capacitor (15) coupled to the transformer (14), and configured to receive the second driving power (Pd2), and
a power transmitting winding (16) coupled to the first resonant capacitor (15), and configured to resonate the second driving power (Pd2) with the first resonant capacitor (15) into an induced power (Ps), wherein the induced power (Ps) is transmitted by the power transmitting winding (16).

2. The power transmitting structure (1) as claimed in claim 1, wherein the isolation capacitor (13) and a primary-side winding (142) of the transformer (14) determine a first resonant frequency, and the first resonant circuit (RT1) determines a second resonant frequency; wherein the first resonant frequency is set to less than the second resonant frequency.

3. The power transmitting structure (1) as claimed in claim 1, wherein the driving circuit (12) comprises:
a first switching bridge arm (122) comprising a first switch (Q1) and a second switch (Q2) connected in series, and the isolation capacitor (13) coupled to a first node (P1) between the first switch (Q1) and the second switch (Q2) and a first terminal of a primary-side winding (142) of the transformer (14).

4. The power transmitting structure (1) as claimed in claim 3, wherein a second terminal of the primary-side winding (142) is coupled to a ground terminal (GND, GND-1, GND-2).

5. The power transmitting structure (1) as claimed in claim 3, wherein the driving circuit (12) further comprises:
a second switching bridge arm (124) comprising a third switch (Q3) and a fourth switch (Q4) connected in series,
wherein a second terminal of the primary-side winding (142) is coupled to a second node (P2) between the third switch (Q3) and the fourth switch (Q4).

6. The power transmitting structure (1) as claimed in claim 3, further comprising:
a current sensing circuit (CS1, CS2, CS3) connected to the primary-side winding (142) in series, and configured to sense a current flowing through the primary-side winding (142) when the driving circuit (12) operates.

7. The power transmitting structure (1) as claimed in claim 1, wherein the transformer (14) is a step-down transformer, and is configured to step down and couple the first driving power (Pd1) into the second driving power (Pd2).

8. The power transmitting structure (1) as claimed in claim 7, wherein the isolation capacitor (13) has a first voltage withstand value and a first current withstand value, and the first resonant capacitor (15) has a second voltage withstand value and a second current withstand value; wherein the first voltage withstand value is greater than the second voltage withstand value, and the second current withstand value is greater than the first current withstand value.

9. The power transmitting structure (1) as claimed in claim 1, wherein the transformer (14) is a step-up transformer, and is configured to step up and couple the first driving power (Pd1) into the second driving power (Pd2).

10. The power transmitting structure (1) as claimed in claim 9, wherein the isolation capacitor (13) has a first voltage withstand value and a first current withstand value, and the first resonant capacitor (15) has a second voltage withstand value and a second current withstand value; wherein the first voltage withstand value is less than the second voltage withstand value, and the second current withstand value is less than the first current withstand value.

11. An inductive power supply circuit (100), **characterized in that** the inductive power supply circuit (100) comprising:
a power transmitting circuit (100A) comprising the power transmitting structure (1) in claim 1, and
a power receiving structure (2) coupled to the power transmitting structure (1), and the power receiving structure (2) comprising:
a second resonant circuit (RT2) comprising:
a power receiving winding (21) coupled to the power transmitting winding (16), and configured to receive the induced power (Ps), and
a second resonant capacitor (22) coupled to the power receiving winding (21), and configured to resonate the induced power (Ps) with the power receiving winding (21) into a power receiving power (Pr), and
a power receiving circuit (23) coupled to the second resonant circuit (RT2) and a load (24), and configured to convert the power receiving power (Pr) into a DC power (Pdc) to supply power to the load (24).

12. The inductive power supply circuit (100) as claimed in claim 11, wherein the power transmitting circuit (100A) further comprises:
a power factor correction circuit (PFC) coupled to the power transmitting structure (1), and configured to convert an AC power (Pac) into the input power (Pin),
wherein the input power (Pin) is the same as a first voltage amplitude of the first driving power (Pd1), and the second driving power (Pd2) is the same as a second voltage amplitude of the DC power.

## Amended claims

### Amended claims in accordance with Rule 137(2) EPC.

1. A power transmitting structure (1) configured for an inductive power supply circuit (100), **characterized in that** the power transmitting structure (1) comprising:
a driving circuit (12) configured to switch an input power (Pin) into a driving power (Pd), wherein the driving circuit (12) is a half-bridge driving structure to switch the input power (Pin) between the voltage level of the input power (Pin) and the voltage level of a ground terminal (GND) to output the driving power (Pd),
an isolation capacitor (13) coupled to the driving circuit (12), and configured to filter a DC component of the driving power (Pd) to provide a first driving power (Pd1),
a transformer (14) coupled to the isolation capacitor (13), and configured to couple the first driving power (Pd1) to a second driving power (Pd2), and
a first resonant circuit (RT1) comprising:
a first resonant capacitor (15) coupled to the transformer (14), and configured to receive the second driving power (Pd2), and
a power transmitting winding (16) coupled to the first resonant capacitor (15), and configured to resonate the second driving power (Pd2) with the first resonant capacitor (15) into an induced power (Ps), wherein the induced power (Ps) is transmitted by the power transmitting winding (16),
wherein the transformer (14) is a step-down transformer, and is configured to step down and couple the first driving power (Pd1) into the second driving power (Pd2), and
wherein the isolation capacitor (13) has a first voltage withstand value and a first current withstand value, and the first resonant capacitor (15) has a second voltage withstand value and a second current withstand value; wherein the first voltage withstand value is greater than the second voltage withstand value, and the second current withstand value is greater than the first current withstand value.

2. The power transmitting structure (1) as claimed in claim 1, wherein the isolation capacitor (13) and a primary-side winding (142) of the transformer (14) determine a first resonant frequency, and the first resonant circuit (RT1) determines a second resonant frequency; wherein the first resonant frequency is set to less than the second resonant frequency.

3. The power transmitting structure (1) as claimed in claim 1, wherein the driving circuit (12) comprises:
a first switching bridge arm (122) comprising a first switch (Q1) and a second switch (Q2) connected in series, and the isolation capacitor (13) coupled to a first node (P1) between the first switch (Q1) and the second switch (Q2) and a first terminal of a primary-side winding (142) of the transformer (14).

4. The power transmitting structure (1) as claimed in claim 3, wherein a second terminal of the primary-side winding (142) is coupled to a ground terminal (GND, GND-1, GND-2).

5. The power transmitting structure (1) as claimed in claim 3, further comprising:
a current sensing circuit (CS1, CS2, CS3) connected to the primary-side winding (142) in series, and configured to sense a current flowing through the primary-side winding (142) when the driving circuit (12) operates.

6. An inductive power supply circuit (100), **characterized in that** the inductive power supply circuit (100) comprising:
a power transmitting circuit (100A) comprising the power transmitting structure (1) in claim 1, and
a power receiving structure (2) coupled to the power transmitting structure (1), and the power receiving structure (2) comprising:
a second resonant circuit (RT2) comprising:
a power receiving winding (21) coupled to the power transmitting winding (16), and configured to receive the induced power (Ps), and
a second resonant capacitor (22) coupled to the power receiving winding (21), and configured to resonate the induced power (Ps) with the power receiving winding (21) into a power receiving power (Pr), and
a power receiving circuit (23) coupled to the second resonant circuit (RT2) and a load (24), and configured to convert the power receiving power (Pr) into a DC power (Pdc) to supply power to the load (24).

7. The inductive power supply circuit (100) as claimed in claim 6, wherein the power transmitting circuit (100A) further comprises:
a power factor correction circuit (PFC) coupled to the power transmitting structure (1), and configured to convert an AC power (Pac) into the input power (Pin),
wherein the input power (Pin) is the same as a first voltage amplitude of the first driving power (Pd1), and the second driving power (Pd2) is the same as a second voltage amplitude of the DC power.
